Europäisches Patentamt

European Patent Office

Office européen des brevets

(11) Veröffentlichungsnummer : **0 050 712**
**B1**

## (12) EUROPÄISCHE PATENTSCHRIFT

(45) Veröffentlichungstag der Patentschrift :
02.05.84

(51) Int. Cl.³ : **H 01 L 41/08**

(21) Anmeldenummer : 81105663.9

(22) Anmeldetag : 18.07.81

(54) **Mechanisches Stellglied.**

(30) Priorität : 23.10.80 DE 3039973

(43) Veröffentlichungstag der Anmeldung :
05.05.82 Patentblatt 82/18

(45) Bekanntmachung des Hinweises auf die Patenterteilung : 02.05.84 Patentblatt 84/18

(84) Benannte Vertragsstaaten :
DE FR GB

(56) Entgegenhaltungen :
GB-A- 1 248 224
US-A- 4 219 755

(73) Patentinhaber : ROBERT BOSCH GMBH
Postfach 50
D-7000 Stuttgart 1 (DE)

(72) Erfinder : Babitzka, Rudolf
Birkenweg 11
D-7141 Kirchberg (DE)
Erfinder : Linder, Ernst, Dipl.-Ing.
Uhlandstrasse 24
D-7130 Mühlacker (DE)

Mechanisches Stellglied

## Stand der Technik

Die Erfindung geht aus von einem mechanischen Stellglied nach der Gattung des Hauptanspruchs. Stellglieder dieser Art werden in vielen Fällen über mechanische Nockenantriebe mit zwischengeschalteten Federn verschiedener Art, pneumatisch- oder elektromagnetisch angetrieben. In Folge des allmählichen Aufbaus der Stellkräfte bis zu einem erreichbaren Maximum und der damit verbundenen verzögerten Beschleunigung des Stellglieds sind extrem kurze Stellzeiten im Mikrosekunden-Bereich mit solchen Stellgliedern nicht realisierbar. Mit beispielsweise aus der DE-OS 20 28 442 bekannten Piezostellern lassen sich Schaltzeiten zwischen 10 und 100 Mikrosekunden erreichen. Der bei diesen Piezostellern erreichbare nutzbare Stellweg ist aber auf Bruchteile von Millimetern beschränkt. Damit ist ihr Anwendungsbereich stark eingeengt.

Ein Piezosteller, der durch die US-PS 4 219 755 bekannt geworden ist, wird fortbewegt wie eine Raupe. Ein Hauptkörper ist in einem Zylinder angeordnet. In Richtung seiner Längsachse liegt eine Säule aus Piezoscheiben, an deren Enden Abschlußkappen mit ringsum verteilten Klemmzungen befestigt sind. Die Klemmzungen umschließen eine Piezoscheibe, die sich radial ausdehnen kann, um die Zungen nach außen gegen die Zylinderwand zu drücken. Zyklisch wechselnd wird die eine Kappe festgeklemmt, während die andere lose ist, die Piezoscheibensäule ausgedehnt (länger gemacht), die andere Kappe festgeklemmt, die eine Kappe gelöst und die Piezoscheibensäule zusammengezogen usf. Der sich so ergebende schrittweise Transport des Hauptkörper wird zum Bewegen eines Stellers genutzt. Hierzu ist eine aufwendige Digitalsteuerung nötig. Sobald eine der Kappen rutscht, wenn sie klemmen sollte, ist der Ablauf gestört. Auch der Verschleiß der Klemmzungen ist relativ hoch. Die Geschwindigkeit der Gesamtbewegung wird durch die Trägheit der Zungen beim federnden Zurückschwingen begrenzt. Sehr kurze Schaltzeiten sind so, trotz der äußerst aufwendigen Bauweise, nicht erzielbar.

## Vorteile der Erfindung

Das mechanische Stellglied mit den kennzeichnenden Merkmalen des Hauptanspruchs hat demgegenüber den Vorteil, daß mit ähnlich kurzen Schaltzeiten wie bei den Piezostellern wesentlich größere Schaltwege erzielbar sind. Dabei bleibt der konstruktive Aufwand relativ gering. Der Verschleiß ist ebenfalls weit geringer. Durch die in den Unteransprüchen aufgeführten Maßnahmen sind vorteilhafte Weiterbildungen und Verbesserungen des im Hauptanspruch angegebenen Stellglieds möglich. Besonders vorteilhaft für einen raumsparenden, einfachen und widerstandsfähigen Aufbau des Stellglieds ist die Anordnung einer durch die Längsausdehnung der längst im Stellglied liegenden Säule beaufschlagten Druckplatte und eines dieser gegenüber gestellten Ambosses, zwischen die ein Elastomer, z. B. ein Gummipolster so angebracht ist, daß die Polsterränder an der Innenfläche der Wand des als Hohlkörper ausgebildeten Stellglieds anliegen.

## Zeichnung

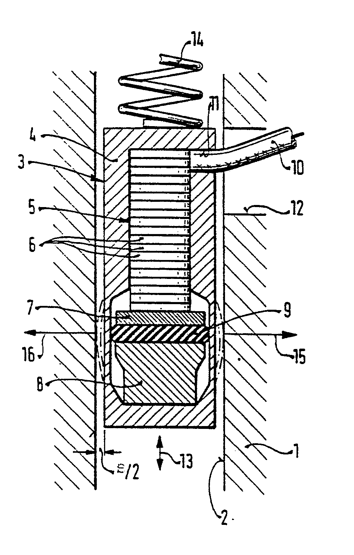

Ein Ausführungsbeispiel des Erfindungsgegenstandes ist in der Zeichnung dargestellt und in der nachfolgenden Beschreibung näher erläutert. Die Figur zeigt einen Schnitt durch ein erfindungsgemäß ausgebildetes Stellglied in einer nur schematisch dargestellten Führung.

## Beschreibung des Ausführungsbeispiels

In einem Gehäuse 1 ist ein Führungskanal 2 für ein Stellglied 3 ausgebildet. In einem Hohlkörper 4 befindet sich eine Säule 5, die aus mehreren aufeinander gestapelten, piezoelektrischen Scheiben 6 besteht. Diese Säule 5 liegt einerseits am Boden des Hohlkörpers 4 an und ist zwischen diesen Boden und eine Platte 7 eingespannt. Der andere, der Säule 5 gegenüber liegende Boden des Hohlkörpers 4 trägt einen Amboß 8. Zwischen die Druckplatte 7 und den Amboß 8 ist ein Gummipolster 9 eingespannt. Dort wo die Druckplatte 7, das Gummipolster 9 und der Amboß 8 zusammentreffen, ist die Wand des Hohlkörpers 4 so weit geschwächt, daß sie elastisch nach außen gedrückt werden kann. Ein Kabel 10 ist durch eine Radialbohrung 11 im Mantel des Hohlkörpers 4 hindurch zur Säule 5 geführt. Eine Ausnehmung 12 im Gehäuse 1 gestattet die Beweglichkeit des Stellglieds 3 in Richtung des Pfeils 13. Die auf das Stellglied 3 wirkende Stellkraft wird durch eine Druckfeder 14 übertragen, während der übrige Antrieb hier nicht näher dargestellt ist. Das Stellglied 3 kann auf verschiedenste Weise angetrieben werden ohne daß seine eigentliche Funktion dadurch beeinflußt wird. Der Anschluß der Säule 5 an eine Speisespannungsquelle, der im Beispielsfalle durch das Kabel 10 verwirklicht ist, kann selbstverständlich auch in bekannter Weise über Schleifkontakte oder dergleichen geeignete Übertragungsmittel erfolgen. Bei ausgeschalteter Betriebsspannung besitzt die Säule 5 die in der Figur gezeigten Abmessungen. Das Gummipolster 9 spannt die Säule 5 zwischen den einen Boden des Hohlkörpers 4 und die Druckplatte 7 ein, wobei es sich am Amboß 8 abstützt. Der Rand dieses Gummipolsters 9 berührt die Innenfläche der Hohlkörperwand im Bereich verminderter Wandstärke. Dieser Zustand ist in der Figur stark gezeichnet. Sobald die Betriebsspannung an die elektrisch hintereinander geschalteten piezoelektrischen Scheiben 6 angelegt wird, verdicken sich diese Scheiben 6 unter gleichzeitiger Kontraktion ihrer Durchmesser und verlängern damit die Säule 5. So wird die Druckplatte 7 auf das Gummipolster 9 gedrückt, daß diesen Druck in Richtung von Pfeilen 15 und 16 auf die geschwächte Wand des Hohlkörpers 4 überträgt und diese nach außen ausbaucht. Das in der Figur selbstverständlich übertrieben groß dargestellte Spiel s des Stellglieds 3 im Führungskanal 2 wird somit überbrückt und das Stellglied 3 im Führungskanal festgeklemmt. Sobald die Betriebsspannung wieder abgeschaltet wird, verkürzt sich die Säule 5 wieder und das Gummipolster 9 sowie die Wand des Hohlkörpers 4 federn in ihre Ausgangslage zurück. Damit ist das Stellglied 3 wieder für seine Stellbewegung längs des Führungskanals 2 freigegeben.

Ein möglicher Benutzungsfall für das Stellglied 3 ist dadurch gegeben, daß dieses Stellglied 3 bei eingeschalteter Betriebsspannung für die Säule 5 im Führungskanal 2 festgeklemmt, ist, solange eine Stellkraft — hier durch Spannen der Druckfeder 14 — aufgebaut wird. Wird die Betriebsspannung für die Säule 5 abgeschaltet, wird das Stellglied 3 schlagartig freigegeben und kann seine Stellbewegung in kürzester Zeit ausführen.

Eine andere Nutzungsmöglichkeit für das Stellglied 3 besteht darin, daß das zunächst bewegungslos gestellte Stellglied 3 schlagartig mit dem in Richtung des Führungskanals 2 bewegten Gehäuse 1 gekoppelt wird. Auch auf diese Weise können die besonderen Eigenschaften des Stellglieds 3 schaltzeitverkürzend wirken.

## Ansprüche

1. Mechanisches Stellglied, das in einem Führungskanal mittels einer auf dieses einwirkenden Stellkraft beweglich angeordnet ist und das piezoelektrische Scheiben aufweist, die an eine Spannungsquelle anschließbar sind und das Festklemmen des Stellgliedes im Führungskanal bewirken, dadurch gekennzeichnet, daß das Stellglied (3) als Hohlkörper (4) ausgebildet ist, welcher einen elastischen Wandbereich verringerter Wandstärke aufweist, daß innerhalb des Hohlkörpers (4) eine mit ihrer Längsrichtung in Bewegungsrichtung des Hohlkörpers ausgerichtete Säule 5 aufeinandergestapelter piezoelektrischer Scheiben 6 angeordnet ist, deren eines Ende sich an dem einen Boden des Hohlkörpers und deren anderes Ende sich über elastische Mittel am anderen Boden des Hohlkörpers abstützt, und daß die elastischen Mittel auf den Bereich verringerter Wandstärke des Hohlkörpers einwirken, um die Klemmwirkung zu erzielen.

2. Mechanisches Stellglied nach Anspruch 1, dadurch gekennzeichnet, daß am anderen Boden des Hohlkörpers (4) ein Amboß (8), auf diesem ein Gummipolster (9) und über dem Gummipolster eine Druckplatte (7) angeordnet sind, daß die Säule (5) am anderen Ende sich auf der Druckplatte abstützt und daß die Ränder des Gummipolsters auf die Innenfläche des elastischen Wandbereichs des Hohlkörpers einwirken.

3. Mechanisches Stellglied nach einem der Ansprüche 1 und 2, dadurch gekennzeichnet, daß es kreisförmigen Querschnitt hat.

## Claims

1. Mechanical adjustment member which is arranged in a guide channel so as to be movable by means of an adjustment force acting on said member and which possesses piezo electric discs which can be connected to a source of potential and which effect the clamping of the adjustment member in the guide channel, characterised in that the adjustment member (3) is constructed as a hollow body (4) which has a resilient wall zone of reduced wall thickness, that within the hollow body (4) there is arranged a column (5), oriented with its lengthwise direction in the direction of movement of the hollow body, of piezo electric discs (6) stacked one above the other, one end of said column being supported against one base of the hollow body and the other end of said column being supported, via resilient means, against the other base of the hollow body, and that the resilient means act on the zone of reduced wall thickness of the hollow body in order to achieve the clamping action.

2. Mechanical adjustment member according to Claim 1, characterised in that at the other base of the hollow body (4) there is provided an anvil (8), a rubber pad (9) on top of said anvil and a thrust plate (7) above the rubber pad, that the column (5) is supported, at the other end, against the thrust plate and that the edges of the rubber pad act on the inner surface of the resilient wall zone of the hollow body.

3. Mechanical adjustment member according to one of Claims 1 and 2, characterised in that it has a circular cross-section.

## Revendications

1. Organe mécanique de réglage disposé dans un canal de réglage en étant mobile au moyen d'un effort de réglage agissant sur lui, et qui comporte des disques piézo-électriques susceptibles d'être raccordés à une source de tension et qui provoquent le blocage de l'organe de réglage dans le canal de guidage, organe de réglage caractérisé en ce qu'il revêt la forme d'une structure creuse (4) comportant une zone de paroi élastique d'épaisseur réduite, une colonne (5) de disques piézo-électriques (6) empilés les uns sur les autres ayant sa direction longitudinale orientée dans la direction de déplacement de la structure creuse, une extrémité de cette colonne prenant appui contre un des fonds de la structure creuse, tandis que l'autre extrémité prend appui, par l'intermédiaire de moyens élastiques sur l'autre fond de la structure creuse, les moyens élastiques agissant sur la zone d'épaisseur de paroi réduite de la structure creuse pour obtenir l'effet de blocage.

2. Organe mécanique de réglage selon revendication 1, caractérisé en ce que, contre l'autre fond de la structure creuse (4) est disposée une enclume (8) sur laquelle sont placés un coussin de caoutchouc (9) et sur ce coussin de caoutchouc une plaque de pression (7), la colonne (5) prenant appui à son autre extrémité sur la plaquette de pression et les bords de coussin de caoutchouc agissant sur la surface interne de la zone élastique de paroi de la structure creuse.

3. Organe mécanique de réglage selon l'une des revendications 1 et 2, caractérisé en ce qu'il a une section transversale circulaire.